# EUROPEAN PATENT SPECIFICATION

(11) **EP 3 454 481 B1**
(45) Date of publication and mention of the grant of the patent: **06.11.2024**
(21) Application number: 17306168.0
(22) Date of filing: 11.09.2017
(51) Int. Cl.: H04B 10/071, G02B 6/44

(54) **SUBMARINE COMMUNICATION CABLE AND METHOD FOR IDENTIFYING AN OPTICAL FIBER**
UNTERWASSERKOMMUNIKATIONSKABEL UND VERFAHREN ZUR IDENTIFIZIERUNG EINER GLASFASER
CÂBLE DE COMMUNICATION SOUS-MARIN ET PROCÉDÉ D'IDENTIFICATION D'UNE FIBRE OPTIQUE

(43) Date of publication of application: 13.03.2019
(73) Proprietor: Alcatel Submarine Networks, 91620 Nozay (FR)
(72) Inventor: LETELLIER, Vincent, 91620 Nozay (FR); AIT SAB, Omar, 91620 Nozay (FR); ROCHER, Olivier, 91620 Nozay (FR)
(74) Representative: Loyer & Abello

(56) References cited:
- WO-A1-2007/048226
- US-A1- 2015 171 958
- US-B2- 7 088 896
- SHIGEHARA M ET AL: "OPTICAL FIBER IDENTIFICATION SYSTEM USING FIBER BRAGG GRATINGS", 1 January 1996, OPTICAL FIBER COMMUNICATION (OFC) 1996. SAN JOSE, FEB. 25 - MAR. 1, 1996; [OPTICAL FIBER COMMUNICATION (OFC)], NEW YORK, IEEE, US, PAGE(S) 162/163, ISBN: 978-0-7803-3189-1, XP000621002

## Description

### Field of the invention

The invention relates to the technical field of optical communications systems, and more particularly, but not exclusively, to submarine communication cables and methods for identifying optical fibers in a submarine communication cable.

### Background

This section introduces aspects that may be helpful to facilitating a better understanding of the inventions. Accordingly, the statements of this section are to be read in this light and are not to be understood as admissions about what is in the prior art or what is not in the prior art.

In modern submarine communication systems, a submarine communication cable comprises several fiber pairs.

During assembly process of the submarine communication cable in the factory, and during repairing process of the submarine communication cable when a cable cut or a default occurs, a major issue is to correctly identify each optical fiber inside the submarine communication cable.

In some conventional approaches, the individual optical fibers may be coated with a colored layer, e.g. a pigment layer on the fiber cladding, to aid in identifying a particular one of the fibers. However, coloring each optical fiber in a different color is costly and may increase optical attenuation of a transmitted optical signal in a colored optical fiber.

US2015/0171958 discloses a submarine optical repeater assembly comprising a first optical fiber and a second optical fiber. Optical signals of the first optical fiber travels from a first terminal to a second terminal. Optical signals of the second optical fiber travels from the second terminal to the first terminal.

XP000621002 discloses an optical fiber identification system using fiber Braggs gratings.

### Summary

The inventors disclose various apparatuses and methods that may be beneficially applied to transmission and reception of optical communications signals.

While such embodiments may be expected to provide improvements in performance and/or reduction of cost of such apparatuses and methods, no
particular result is a requirement of the present invention unless explicitly recited in a particular claim.

Aspects of the disclosure are based on the idea of making possible rapid and cost-effective identification of optical fibers in an optical cable, for example a submarine optical cable or a terrestrial optical cable, without the need for color-coding individual ones of the optical fibers.

The invention provides an optical cable for transmitting optical signals according to claim 1. Further embodiments of the optical cable of the invention are found in the dependent claims.

The first and second optical reflectors enable the first and second optical fibers to be tagged. Thanks to these features, a tagged optical fiber can be identified at low cost. Moreover, the tagged optical fiber does not have a substantial additional attenuation of a transmitted optical signal compared to an optical fiber tagged by fiber coloring process. Therefore the tagged optical fiber of the optical cable offers a substantial gain of system performance that could be used to reduce the cost or increase the capacity and/or the distance of the transmission system.

Thanks to these features, the first optical fiber may be easily identified in a reparation process wherever an accidental cut has happened on the span of the first optical fiber.

According to embodiments, such an optical cable can comprise one or more of the features below.

In embodiments, the first optical reflector is optically coupled to the first optical fiber via a first optical splitter/coupler, and the second optical reflector is optically coupled to the second optical fiber via a second optical splitter/coupler.

In embodiments, the optical reflector is transparent to a Wavelength Division Multiplexing (WDM) signal spectrum.

In embodiments, the optical fibers are configured to transmit WDM optical signals in the WDM signal spectrum.

In an embodiment, the DBG optical reflector or each respective DBG optical reflector is formed at the end of the respective optical fiber.

In embodiments, an additional optical reflector is further formed near the opposite end of one or more respective optical fibers, the additional reflector having the same properties as the optical reflector formed near the one end of the respective optical fiber.

In an example, one or more of the optical reflectors is a DBG optical reflector directly formed on a respective optical coupler, or the respective optical reflector is carried by the respective optical coupler in order to be arranged on the respective optical fiber. The optical coupler may synonymously be referred to as a splitter/coupler.

In an example, the respective optical reflector may be a DBG formed within the optical path of the optical coupler, which may be a planar optical device, or may be formed within a short optical fiber coupled to the optical coupler.

In embodiments, the optical fiber(s) may be selected from the list consisting of single mode optical fibers, multimode optical fibers, mono-core or multi-core optical fibers, and silica optical fibers.

In embodiments, the optical fibers of the pair of optical fibers are not color-coded. For example, the fibers all have a same-colored (or uncolored) jacket or cladding. Thus, fiber identification by color-coding is not possible.

In embodiments, the optical cable comprises a third optical fiber, wherein the number of optical reflectors is fewer than the number of optical fibers. In other words, in such an embodiment, no optical reflector is located near either end of at least one optical fiber of the span of optical cable.

In embodiments, one or more of the optical reflectors are tunable in reflection wavelength.

In embodiments, the first one of the pair of optical fibers is adapted to transmit first wavelength-multiplexed optical signals, and the second one of the pair of optical fibers is adapted to transmit second wavelength-multiplexed optical signals.

In embodiments, the optical reflector is adapted to transmit the first wavelength-multiplexed optical signals and the second optical reflector is adapted to transmit the second wavelength-multiplexed optical signals.

In embodiments, the optical cable further comprises a third optical reflector optically coupled to the first optical fiber near a second end of the span, and a fourth optical reflector optically coupled to the second optical fiber near the second end of the span.

The invention also provides a use of the optical cable at least partially submerged under water.

The number of other pairs of optical fibers in the submarine cable may be any number. In an embodiment, the number is equal to one. In embodiments not covered by the scope of the claims, the tagging wavelength(s) may be selected in the same wavelength band as the wavelengths of the wavelength-multiplexed optical signals, while in the claimed invention said tagging wavelengths lie in a different wavelength band. For example, the tagging wavelength(s) may be selected in the S band. For example, the wavelengths of the wavelength-multiplexed optical signals may be selected in the C or L bands. The S band is generally considered to be the wavelength band comprised between 1460nm and 1530nm The C band is generally considered to be the wavelength band comprised between 1530nm and 1565nm and the L band is the wavelength band comprised between 1565nm and 1625nm.

Various embodiments also provide a submarine cable comprising:
-- a water and pressure resistant tube, and

- the optical cable according to any one of the embodiments hereinabove described arranged in the tube.

According to embodiments, such a submarine cable can comprise one or more of the features below.

In embodiments, the submarine cable further comprises an electrical wire in the water and pressure resistant tube, e.g. to provide power to electrically-powered optical amplifiers located along the submarine cable.

In an embodiment, the submarine cable is further adapted to be connected to a submarine repeater for amplifying wavelength-multiplexed optical signals.

In an embodiment, the length of the submarine cable is longer than 150 km.

In embodiments, the invention also provides an identifying device for identifying an optical fiber among a set of candidate optical fibers, the identifying device comprising:
- the optical cable according to embodiments hereinabove described, wherein the set of candidate optical fibers comprises at least two of the optical fibers of the optical cable, and
- an optical tagging device,

the optical tagging device comprising an optical pulse generator adapted to generate a first optical tagging pulse having the first tagging wavelength, the optical pulse generator being coupled to the other end of the first optical fiber opposite to the one end in order to send the first optical tagging pulse in the first optical fiber,
the optical tagging device further comprising an optical pulse detector, the optical pulse detector being coupled to the other end of the first optical fiber, the optical pulse detector being adapted to detect a reflected optical tagging pulse which is the reflection of the first optical tagging pulse on the optical reflector arranged on the first optical fiber.

In embodiments, the optical tagging device comprises an optical time domain reflectometer (OTDR).

The invention also provides a method for identifying a tagged optical fiber to be selected in a set of candidate optical fibers according to claim 8.

According to embodiments, such a method can comprise one or more of the features below.

In embodiments, the candidate optical fibers are not color-coded.

In embodiments, said candidate optical fibers are located within a submarine optical cable.

In the present invention, said candidate optical fibers are configured to carry optical communication signals in a first optical communication band, and said first tagging wavelength is located within a second different optical communication band.

In embodiments, the method further comprises rejecting the candidate optical fiber in response to not receiving a reflection of the optical tagging pulse.

### Brief description of the drawings

These and other aspects of the invention will be apparent from and elucidated with reference to the embodiments described hereinafter, by way of example, with reference to the drawings.
Figure 1 is a picture of a cross section of a submarine communication cable.
Figure 2 is a schematic view of an optical fiber of the submarine communication cable of figure 1.
Figure 3 is a schematic view of a submarine communication cable connected to an optical submarine repeater.
Figure 4 is the schematic of a trace of an Optical Time Domain Reflectometer (OTDR) when a measurement is performed on the optical fiber of Figure 2, in which is coupled an optical pulse having a wavelength different from the tagging wavelength of the optical fiber.
Figure 5 is the schematic of a trace of an Optical Time Domain Reflectometer (OTDR) when a measurement is performed on the optical fiber of Figure 2, in which is coupled an optical pulse having the tagging wavelength of the optical fiber.
Figure 6 is a schematic representation of an end of a span of the optical fiber of the Figure 2, for the case that a distributed Bragg grating reflector is formed directly in the fiber.
Figure 7 is a schematic representation of an optical splitter/coupler configured to direct a portion of an incident tagging pulse from a candidate fiber to a reflector, and coupling a reflection of the pulse from the reflector back to the candidate fiber.

### Detailed description of the embodiments

The description hereinbelow is directed to an optical communication cable in which one or more optical fibers are tagged for enabling the identification of the optical fibers. Although the example is directed to a submarine cable, the optical cable described below may be comprised in any kind of cable including, but not limited to, a terrestrial cable or a subsurface cable.

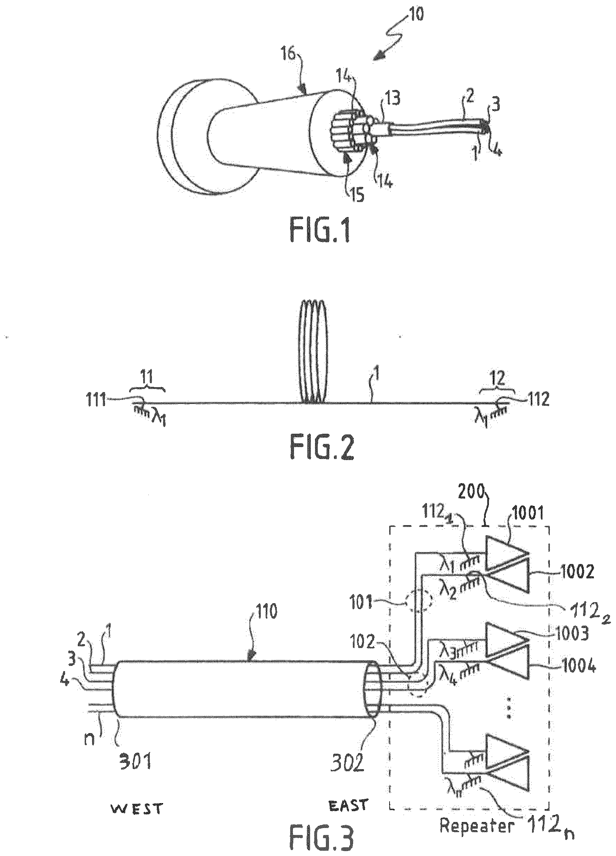

With reference to **Figure 1****,** a communication cable 10, e.g. a submarine cable, will be described according to various embodiments.

The optical communication cable 10 is a cable adapted to be laid on the sea bed between land-based stations to carry telecommunication signals across the sea between the land-based stations. For example, the land-based stations may be separated by an ocean. In such a case, the submarine communication cable is connected typically to optical submarine repeaters laid on the sea bed as well.

As represented, the optical communication cable 10 comprises an optical cable comprising two pairs of optical fibers 1, 2, and 3, 4, the optical cable being arranged into a petroleum jelly inside an aluminum tube 13. The optical communication cable 10 further comprises stranded steel wires 14 arranged all around the aluminum tube 13. The stranded steel wires 14 are wrapped with electrical layer 15 of copper wires and the whole optical communication cable 10 further comprises a polyethylene sleeve 16 protecting against salted water and bumps.

The electrical layer 15 is adapted to transmit electrical power to submarine repeaters and/or electrical communication signals from one end to another.

The pairs of optical fibers 1, 2 and 3, 4 are adapted to transmit optical signals from one end to another.

A first optical fiber 1 of the pair of optical fibers 1, 2 is adapted to transmit an optical signal in a direction from one end to another, e.g. east (W) to west (E), whereas a second optical fiber 2 of the pair of optical fiber 1, 2 is adapted to transmit an optical signal in the opposite direction, e.g. E to W. The same applies to the pair of optical fibers 3, 4.

With reference to **Figure 2****,** the optical fiber 1 will be further described, according to various embodiments.

The optical fiber 1 comprises two ends 11 and 12. The optical fiber 1 includes a flexible silica fiber adapted to transmit an optical signal between the two ends 11 and 12.The optical signal may be carried by any wavelength in a defined bandwidth spectrum. The loops represented on the optical fiber 1 schematically depicts that the span of the optical fiber 1 is typically very long, for example is about 155 km. The optical fiber 1 may be a Conventional Single Mode Fiber (CSF fiber).

As represented, the first end 11 of the optical fiber 1 is equipped with a first optical reflector 111 and the second end 12 of the optical fiber 2 is equipped with a second optical reflector 112. The first optical reflector 111 is located near the first end 11. By "near", it is meant that the reflector 111 is physically coupled to a portion of the optical fiber 1 that is outside any surrounding protective layers of a cable of which the optical fiber 1 is a part. In the example embodiment of the cable 10 (Figure 1), the optical fibers 1-4 have been exposed by removal of the tube 13, wires 14 and sleeve 15. The first optical reflector 111 is located near the end of the fiber 1 when the reflector 111 is located in or coupled to a portion of the fiber 1 that is exposed after the removal of these layers. The reflectors 111, 112 may be coupled to the fiber 1 by a respective splitter/coupler, or as described in greater detail below may be formed within the fiber 1.

The first and the second optical reflectors 111 and 112 are adapted to reflect optical signals or part of optical signals carried by a tagging wavelength λ₁.

Moreover, the optical reflectors 111 and 112 are adapted to transmit, or pass, optical signals or part of optical signals carried by one or more wavelengths of the defined bandwidth spectrum.

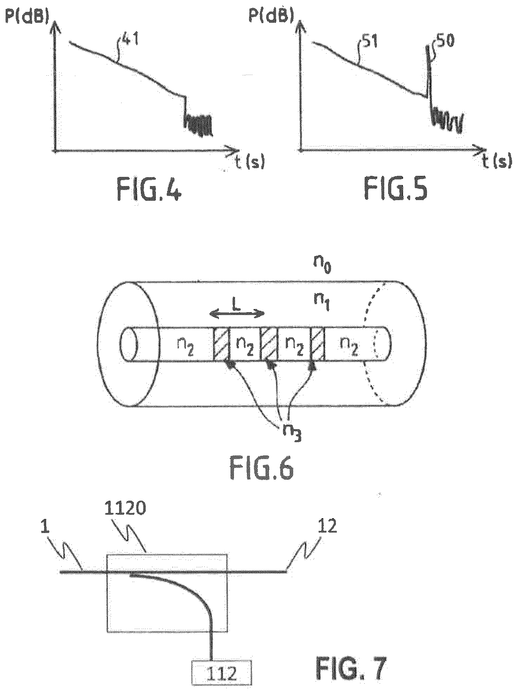

Figure 7 illustrates in greater detail the relationship between an optical fiber, e.g. the fiber 1, and an optical reflector, e.g. the reflector 112. A splitter/coupler 1120 diverts a portion of light received via the fiber 1 to the reflector 112. The splitter/coupler 1120 may be referred to for brevity as coupler 1120 without loss of generality. Conversely, light reflected by the optical reflector 112 is coupled by the coupler 1120 to the fiber 1. Although not shown explicitly in Figure 2 and in Figure 3 below, the coupler 1120 is presumed to be present unless otherwise described. The reflector 112 may be a distributed Bragg grating (DBG) formed in an optical fiber or in a planar waveguide. The reflector 112 is described in greater detail below with reference to Figure 6.

**Figure 3** is a schematic view of an optical communication cable 110 connected to an optical submarine repeater 200, according to various embodiments.

As represented, the optical communication cable 110 comprises a plurality of bundled pairs of optical fibers extending from one end 301 of the optical communication cable 110, e.g. west, to another end 302 of the optical communication cable 110, e.g. east.

For the sake of simplicity, the optical fibers of a first pair 101 and a second pair 102 of optical fibers are similar to the optical fibers 1, 2, 3 and 4 described with reference to Figures 1 and 2. For the sake of simplicity, the optical fibers of the first pair 101 and of the second pair 102 are referenced by the same reference numbers as in Figures 1 and 2.

In general an optical communication cable may have n optical fibers arranged as pairs. In an embodiment a tagging wavelength is assigned to each optical fiber 1, 2, 3, 4 to *n.* In the illustrated embodiment an instance of the optical reflector is coupled to each of the *n* optical fibers at only one end, e.g. east, of the optical communication cable 110. In other embodiments, an optical reflector may also be coupled to the optical fibers at the other end, e.g. west, of the optical communication cable 110, as described for the optical fiber 1 with reference to Figure 2. The optical reflector coupled to a particular optical fiber reflects only the tagging wavelength assigned to that fiber. Moreover, the optical reflector is transparent to the spectrum of wavelengths of optical communication signals carried by that fiber.

Thus, for example, an optical reflector 112₁ of the first optical fiber 1 is adapted to reflect a tagging wavelength λ₁. As described in greater detail below, the tagging wavelength λ₁ may therefore be used as a tag for identifying the first optical fiber 1.

Stated more generally, an optical reflector 112*ᵢ* of an *i*^{th} optical fiber is adapted to reflect a corresponding tagging wavelength λᵢ, wherein none of the optical fibers share a same tagging wavelength. Therefore each tagging wavelength λᵢ may be used to as a tag for identifying the corresponding *i*^{th} optical fiber, wherein i is an integer from 1 to n.

The optical submarine repeater 200 comprises optical amplifiers 1001, 1002, 1003, 1004 etc. adapted to amplify a received attenuated optical signal respectively carried by the respective optical fibres 1, 2, 3, 4 etc.

As previously described with reference to Figure 1, a first optical fiber of a pair of optical fiber is adapted to transmit a first optical signal in a direction from one end to another, e.g. west to east, whereas a second optical fiber of the pair of optical fiber is adapted to transmit a second optical signal in the opposite direction, e.g. east to west.

Therefore each optical fiber of each pair of optical fibers may be connected to a corresponding pair of optical amplifiers at the east end of the optical communication cable 110, one configured to receive an eastbound signal from one fiber of the pair, and one configured to transmit a westbound signal to the other fiber of the pair. Optical amplifiers may be similarly located at the opposite, e.g. west, end of the optical communication cable 110.

More precisely, a first optical fiber, for example optical fiber 1, of a pair of optical fibers, for example the pair of optical fibers 101, is connected to a first optical amplifier, for example optical amplifier 1001, of a pair of optical amplifiers, for example the pair comprising the optical amplifiers 1001 and 1002. The first optical amplifier is configured to amplify an optical signal which is received from the first optical fiber.

A second optical fiber, for example optical fiber 2, of the pair of optical fibers is connected to a second optical amplifier, for example optical amplifier 1002. The second optical amplifier is configured to amplify an optical signal to be transmitted to the second optical fiber.

The two optical amplifiers of a pair of optical amplifiers are adapted to amplify optical signals received in two opposite directions, e.g. west to east and east to west.

For each optical fiber 1, 2, 3, 4 etc., the corresponding optical reflectors are used as tagging devices for tagging the optical fiber in the method described below.

The method to identify the optical fiber 1 comprises an Optical Time Domain Reflectometer (OTDR) measurement using a tag-identifying optical pulse that includes the tagging wavelength of the optical fiber.

For example, an operator may couple the tag-identifying optical pulse into an optical fiber to be identified, and measure a reflection of the optical pulse using the OTDR measurement device. More specifically, for example, the operator may couple a light pulse including λ₁ into the optical fiber 1 at an input end, e.g. the left (west) side of Figure 3. After propagating east the length of the fiber 1, a portion of the signal is diverted by the coupler 1120 (Figure 7) to the optical reflector 112₁. Light in the pulse having the wavelength λ₁ is reflected by the optical reflector 112₁, and coupled back to the fiber 1 and propagates back to the input (west) end of the fiber. The portion of the signal not diverted by the coupler 1120 will propagate to the amplifier 1001. If the pulse only includes light at λ₁, and is coupled to another one of the optical fibers, the pulse will not be reflected by the optical reflector coupled to that optical fiber. Thus optical fiber 1 may be uniquely identified among the various optical fibers. Of course, this principle may be extended to identify each of the other optical fibers using corresponding pulses of λ₁, λ₂, λ₃,... λₙ. Optionally, the optical coupler and reflector may be omitted from one of the optical fibers, as this optical fiber may be known after the other fibers are identified.

The two cases are described with reference to Figures 4 and 5 with the example of optical fiber 1.

Figure 4 schematically represents a measured OTDR trace of a tag identifying optical pulse having any tagging wavelength other than λ₁ in the optical fiber 1, e.g. λ₂. As pictured, the OTDR measure of a tag identifying optical pulse having the tagging wavelength λ₂ shows no reflection peak at the end of the optical fiber 1. Figure 5 schematically represents a measured OTDR trace of a tag identifying optical pulse having a tagging wavelength λ₁ in the optical fiber 1. In this case the OTDR trace shows a reflection peak 50 corresponding to the round-trip time between launching the optical pulse at the input (e.g. west) end of the optical fiber 1, and the return of the pulse reflected by the reflector 112.

The slopes 41, 51 pictured on Figures 4 and 5 show the absorption of the optical fiber 1, respectively for the tagging wavelength λ₂ and tagging wavelength λ₁.

Several useful advantages of the described method are apparent. First, coloring of the optical fibers for the purpose of fiber identification may be eliminated. Second, even very long span optical fibers, for example 155 km long optical fibers, can be tagged and identified in a very short time, for example in less than one minute. Third, the method does not impact the assembly process operation. Finally, an optical fiber may be easily identified in a reparation process following an accidental cut of the optical cable. For example, an accidental cut of the optical cable of the submarine cable may be caused by a trawler.

By detecting the reflection peak 50 only when coupling the optical fiber 1 with a tag identifying optical pulse having the tagging wavelength λ₁, the operator deduces that the optical fiber to determined is the optical fiber 1.

Similarly, OTDR traces will show a reflection peak for the optical fiber 2 when coupling with a tag-identifying optical pulse having a tagging wavelength λ₂ and so on for the other fibers.

A method for determining a particular tagged optical fiber in a set of candidate optical fibers of an optical cable, e.g. a submarine communication cable, is described below. The tagged optical fiber is uniquely associated with a corresponding tagging optical wavelength.

The operator selects a candidate optical fiber in the set of candidate optical fibers.

The operator launches an OTDR measurement on the selected candidate optical fiber at the tagging wavelength corresponding to the tagged optical fiber.

If the OTDR trace shows a reflection peak at the end of the candidate optical fiber, the candidate optical fiber is determined to be the tagged optical fiber.

If the OTDR trace does not show any reflection peak at the end of the candidate optical fiber, the operator selects a new candidate optical fiber and launches a new OTDR measurement at the tagging wavelength, until an OTDR trace of a candidate optical fiber shows the reflection peak.

The method above described is very useful to identify the optical fibers in any optical cable, for example in a submarine communication cable, namely during assembly process of the submarine communication cable or during a submarine communication cable repair.

The last optical fiber, which optionally has no reflector, may be identified in the submarine communication cable by the fact that no reflection peak is observed when a pulse of light of any tagging wavelength is sent in the last optical fiber.

The reflectors tagging each optical fiber 1, 2, 3, 4 etc. may each be a DBG reflector coupled to the corresponding optical fiber by a splitter/coupler. In this case, the DBG may be formed in a planar optical waveguide, or may be formed in a short optical fiber connected to the splitter/coupler. A DBG formed in an optical fiber is sometimes referred to as a fiber Bragg grating (FBG). In some alternate embodiments the FBG may be formed directly in the corresponding optical fiber, in which cases the splitter/coupler is not needed. In such embodiments, wavelengths other than the reflected wavelength, e.g. communication signals, will pass through the FBG to the amplifier connected to the optical fiber. An FBG reflector formed within an optical fiber is defined for the purpose of this discussion and the claims as being coupled to the optical fiber in which it is formed.

Figure 6 shows an example of a FBG that may be used in some embodiments. An optical fiber comprises a core having a refractive index n₂ and a cladding having a refractive index n₁. A refractive index no represents a buffer, jacket or air.

A periodic variation of the refractive index of the core has been created within the core using methods well-known to those skilled in the art. The period of the variation is referenced on the Figure 6 by letter L. The refractive index of the core alternates from a first refractive index n₂ to a second refractive index n₃ on each period L. This periodic variation in the refractive index of the core generates a wavelength-specific dielectric mirror which selectively reflects a corresponding one of the tagging wavelengths while passing other wavelengths.

In some other embodiments, one or more reflectors may include an optical ring resonator structure, such as may be formed on a planar optical device. Such resonators may be used, e.g. when the reflector is coupled to the associated optical fiber via a splitter/coupler. Reflectors based on a ring resonator may provide an advantage in some cases by providing tunability of the reflection wavelength. It is expected that such reflectors may be more easily implemented in terrestrial cable environments, but embodiments are not limited to such implementations. Any other well-known method of tuning may be used, depending on the DBG implementation, e.g. thermal control or fiber tension.

Embodiments of the invention are not limited to those described above. The appended claims are to be construed as embodying all modification and alternative constructions that may be occurred to one skilled in the art, which fairly fall within the basic teaching here, set forth. For example, the tagging wavelengths may be selected out-of-band of the spectrum amplified by the amplifiers 1001, 1002 etc., or at an unused optical band as for example in the S or in the L band in order to avoid spectrum waste.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. An optical cable (110) for transmitting optical signals, the optical cable (110) comprising an optical cable span having a first end and a second end, said optical cable span including a first optical fiber (1) and a second optical fiber (2); the first and second optical fibers extending from the first end of the optical cable span to the second end of the optical cable span, wherein said first and second optical fibers are configured to propagate optical communications signals in a first optical communication band, the optical cable (110) comprising:
a first optical reflector (112) optically coupled to said first optical fiber near the first end (302) of said optical cable span and configured to reflect a first tagging wavelength (λ₁) of light; and
a second optical reflector (112) optically coupled to said second optical fiber near said first end (302) of said optical cable span, wherein at least one of the optical reflectors comprises a distributed Bragg grating (DBG),
**characterized in that** the second optical reflector is configured to reflect a second different tagging wavelength (λ₂) of light,
the DBG being formed in an optical fiber core, , and the optical reflectors being transparent to the first optical communication band, wherein said first and second tagging wavelengths are located within a second different optical communication band.

2. An optical cable according to claim 1, wherein said first optical reflector is optically coupled to said first optical fiber via a first optical splitter/coupler (1120), and said second optical reflector is optically coupled to said second optical fiber via a second optical splitter/coupler (1120).

3. An optical cable according to claim 1, wherein the optical fibers are not color-coded.

4. An optical cable according to claim 1, comprising a third optical fiber, wherein the number of optical reflectors is fewer than the number of optical fibers.

5. An optical cable according to claim 1, wherein one or more of the optical reflectors are tunable in reflection wavelength.

6. An optical cable according to any one of claims 1 to 5, further comprising a third optical reflector optically coupled to said first optical fiber near a second end (12) of said span, and a fourth optical reflector optically coupled to said second optical fiber near said second end (12) of said span.

7. Use of an optical cable according to any one of claims 1 to 6, wherein said optical cable is at least partially submerged under water.

8. A method for identifying tagged optical fibers (1) in an optical cable (110) including a set of candidate optical fibers (1, 2, 3, 4, n) that extend from a first end of the optical cable to a second end of the optical cable, the method comprising:
- providing a set of candidate optical fibers (1, 2, 3, 4, n), wherein a first optical reflector (112) is coupled to a first one of said optical fibers near the first end (302) of the optical cable, the first optical reflector (112) being configured to reflect a first tagging wavelength (λ₁) at the first end (302), wherein a second optical reflector (112) is coupled to a second one of said optical fibers near the one end (302) of the optical cable, the second optical reflector (112) being configured to reflect a second different tagging wavelength (λ₂) at the one end (302), at least one of the first and second optical reflectors comprising a distributed Bragg grating (DBG), the DBG being formed in an optical fiber core, said candidate optical fibers being configured to carry optical communication signals in a first optical communication band, and said first and second tagging wavelengths being located within a second different optical communication band,
- directing the first optical tagging pulse including said first tagging wavelength to the first one of said optical fibers at the second end (301) of the optical cable , and
- receiving a reflection of said first optical tagging pulse at said second end,
- directing a second optical tagging pulse including said second tagging wavelength to said second one of said optical fibers at the second end (301) of the optical cable, and
- receiving a reflection of said second optical tagging pulse at said second end.

9. A method according to claim 8, wherein the candidate optical fibers are not color-coded.

10. A method according any of claims 8 to 9, wherein said candidate optical fibers are located within a submarine optical cable.

## Patentansprüche

1. Optisches Kabel (110) zum Übertragen von optischen Signalen, wobei das optische Kabel (110) eine optische Kabelspanne mit einem ersten Ende und einem zweiten Ende umfasst, wobei die optische Kabelspanne einen ersten Lichtwellenleiter (1) und einen zweiten Lichtwellenleiter (2) beinhaltet; wobei sich der erste und der zweite Lichtwellenleiter vom ersten Ende der optischen Kabelspanne zum zweiten Ende der optischen Kabelspanne erstrecken, wobei der erste und der zweite Lichtwellenleiter dazu ausgelegt sind, optische Kommunikationssignale in einem ersten optischen Kommunikationsband auszubreiten, wobei das optische Kabel (110) Folgendes umfasst:
einen ersten optischen Reflektor (112), der in der Nähe des ersten Endes (302) der optischen Kabelspanne optisch an den ersten Lichtwellenleiter gekoppelt und dazu ausgelegt ist, eine erste Taggingwellenlänge (λ₁) Licht zu reflektieren; und
einen zweiten optischen Reflektor (112), der in der Nähe des zweiten Endes (302) der optischen Kabelspanne optisch an den zweiten Lichtwellenleiter gekoppelt ist, wobei mindestens einer der optischen Reflektoren ein verteiltes Bragg-Gitter (DBG) umfasst,
**dadurch gekennzeichnet, dass** der zweite optische Reflektor dazu ausgelegt ist, eine zweite andere Taggingwellenlänge (λ₂) Licht zu reflektieren,
wobei das DBG in einem Lichtwellenleiterkern gebildet ist und wobei die optischen Reflektoren für das erste optische Kommunikationsband transparent sind, wobei sich die erste und die zweite Taggingwellenlänge in einem zweiten anderen optischen Kommunikationsband befinden.

2. Optisches Kabel nach Anspruch 1, wobei der erste optische Reflektor via einen ersten optischen Splitter/Koppler (1120) optisch an den ersten Lichtwellenleiter gekoppelt ist und der zweite optische Reflektor via einen zweiten optischen Splitter/Koppler (1120) optisch an den zweiten Lichtwellenleiter gekoppelt ist.

3. Optisches Kabel nach Anspruch 1, wobei die Lichtwellenleiter nicht farbcodiert sind.

4. Optisches Kabel nach Anspruch 1, das einen dritten Lichtwellenleiter umfasst, wobei die Anzahl von optischen Reflektoren kleiner ist als die Anzahl von Lichtwellenleitern.

5. Optisches Kabel nach Anspruch 1, wobei ein oder mehrere der optischen Reflektoren in einer Reflexionswellenlänge abstimmbar sind.

6. Optisches Kabel nach einem der Ansprüche 1 bis 5, das ferner einen dritten optischen Reflektor, der in der Nähe eines zweiten Endes (12) der Spanne optisch an den ersten Lichtwellenleiter gekoppelt ist, und einen vierten optischen Reflektor, der in der Nähe des zweiten Endes (12) der Spanne optisch an den zweiten Lichtwellenleiter gekoppelt ist, umfasst.

7. Verwenden eines optischen Kabels nach einem der Ansprüche 1 bis 6, wobei das optische Kabel mindestens teilweise unter Wasser getaucht ist.

8. Verfahren zum Identifizieren von markierten Lichtwellenleitern (1) in einem optischen Kabel (110), das einen Satz von Lichtwellenleiterkandidaten (1, 2, 3, 4, n) beinhaltet, die sich von einem ersten Ende des optischen Kabels zu einem zweiten Ende des optischen Kabels erstrecken, wobei das Verfahren Folgendes umfasst:
- Bereitstellen eines Satzes von Lichtwellenleiterkandidaten (1, 2, 3, 4, n), wobei ein erster optische Reflektor (112) in der Nähe des ersten Endes (302) des optischen Kabels an einen ersten der Lichtwellenleiter gekoppelt ist, wobei der erste Reflektor (112) dazu ausgelegt ist, eine Taggingwellenlänge (λ₁) am ersten Ende (302) zu reflektieren, wobei der zweite optische Reflektor (112) in der Nähe des einen Endes (302) des optischen Kabels an einen zweiten der Lichtwellenleiter gekoppelt ist, wobei der zweite optische Reflektor (112) dazu ausgelegt ist, eine zweite andere Taggingwellenlänge (λ₂) an dem einen Ende (302) zu reflektieren, wobei mindestens einer des ersten und des zweiten optischen Reflektors ein verteiltes Bragg-Gitter (DBG) umfasst, wobei das DBG in einem Lichtwellenleiterkern gebildet ist, wobei die Lichtwellenleiterkandidaten dazu ausgelegt sind, optische Kommunikationssignale in einem ersten optischen Kommunikationsband zu transportieren, und wobei sich die erste und die zweite Taggingwellenlänge in einem zweiten anderen optischen Kommunikationsband befinden,
- Leiten des ersten optischen Taggingimpulses, der die erste Taggingwellenlänge beinhaltet, zum ersten der Lichtwellenleiter am zweiten Ende (301) des optischen Kabels, und
- Empfangen einer Reflexion des ersten Taggingimpulses am zweiten Ende,
- Leiten eines zweiten optischen Taggingimpulses, der die zweite Taggingwellenlänge beinhaltet, zum zweiten der Lichtwellenleiter am zweiten Ende (301) des optischen Kabels, und
- Empfangen einer Reflexion des zweiten Taggingimpulses am zweiten Ende.

9. Verfahren nach Anspruch 8, wobei die Lichtwellenleiterkandidaten nicht farbcodiert sind.

10. Verfahren nach einem der Ansprüche 8 bis 9, wobei sich die Lichtwellenleiterkandidaten in einem optischen Unterwasserkabel befinden.

## Revendications

1. Câble optique (110) pour transmettre des signaux optiques, le câble optique (110) comprenant une portée de câble optique ayant une première extrémité et une seconde extrémité, ladite portée de câble optique comprenant une première fibre optique (1) et une deuxième fibre optique (2) ; les première et deuxième fibres optiques s'étendant à partir de la première extrémité de la portée de câble optique jusqu'à la seconde extrémité de la portée de câble optique, dans lequel lesdites première et deuxième fibres optiques sont configurées pour propager des signaux de communication optiques dans une première bande de communication optique, le câble optique (110) comprenant :
un premier réflecteur optique (112) couplé, par voie optique, à ladite première fibre optique à proximité de la première extrémité (302) de ladite portée de câble optique et configuré pour refléter une première longueur d'onde de marquage (λ₁) de lumière ; et
un deuxième réflecteur optique (112) couplé, par voie optique, à ladite deuxième fibre optique à proximité de ladite première extrémité (302) de ladite portée de câble optique, dans lequel au moins l'un des réflecteurs optiques comprend un réseau de Bragg distribué (DBG),
**caractérisé en ce que** le deuxième réflecteur optique est configuré pour refléter une seconde longueur d'onde de marquage (λ₂) différente de lumière,
le DBG étant formé dans une âme de fibre optique, et les réflecteurs optiques étant transparents par rapport à la première bande de communication optique, dans lequel lesdites première et seconde longueurs d'onde de marquage sont positionnées dans une seconde bande de communication optique différente.

2. Câble optique selon la revendication 1, dans lequel ledit premier réflecteur optique est couplé, par voie optique, à ladite première fibre optique via un premier diviseur/coupleur optique (1120) et ledit deuxième réflecteur optique est couplé, par voie optique, à ladite deuxième fibre optique via un second diviseur/coupleur optique (1120).

3. Câble optique selon la revendication 1, dans lequel les fibres optiques ne sont pas codées par couleur.

4. Câble optique selon la revendication 1, comprenant une troisième fibre optique, dans lequel le nombre de réflecteurs optiques est inférieur au nombre de fibres optiques.

5. Câble optique selon la revendication 1, dans lequel un ou plusieurs des réflecteurs optiques sont réglables en longueur d'onde de réflexion.

6. Câble optique selon l'une quelconque des revendications 1 à 5, comprenant en outre un troisième réflecteur optique couplé, par voie optique, à ladite première fibre optique à proximité d'une seconde extrémité (12) de ladite portée, et un quatrième réflecteur optique couplé, par voie optique, à ladite deuxième fibre optique à proximité de ladite seconde extrémité (12) de ladite portée.

7. Utilisation d'un câble optique selon l'une quelconque des revendications 1 à 6, dans laquelle ledit câble optique est au moins partiellement immergé sous l'eau.

8. Procédé pour identifier des fibres optiques (1) marquées dans un câble optique (110) comprenant un ensemble de fibres optiques candidates (1, 2, 3, 4, n) qui s'étendent à partir d'une première extrémité du câble optique à une seconde extrémité du câble optique, le procédé comprenant les étapes consistant à :
- prévoir un ensemble de fibres optiques candidates (1, 2, 3, 4, n), dans lequel un premier réflecteur optique (112) est couplé à une première desdites fibres optiques à proximité de la première extrémité (302) du câble optique, le premier réflecteur optique (112) étant configuré pour refléter une première longueur d'onde de marquage (λ₁) à la première extrémité (302), dans lequel un deuxième réflecteur optique (112) est couplé à une deuxième desdites fibres optiques à proximité de la une extrémité (302) du câble optique, le deuxième réflecteur optique (112) étant configuré pour refléter une seconde longueur d'onde de marquage (λ₂) différente à la une extrémité (302), au moins l'un des premier et deuxième réflecteurs optiques comprenant un réseau de Bragg distribué (DBG), le DBG étant formé dans une âme de fibre optique, lesdites fibres optiques candidates étant configurées pour transporter les signaux de communication optiques dans une première bande de communication optique, et lesdites première et seconde longueurs d'onde de marquage étant positionnées dans une seconde bande de communication optique différente,
- diriger la première impulsion de marquage optique comprenant ladite première longueur d'onde de marquage sur la première desdites fibres optiques à la seconde extrémité (301) du câble optique, et
- recevoir une réflexion de ladite première impulsion de marquage optique au niveau de ladite seconde extrémité,
- diriger une seconde impulsion de marquage optique comprenant ladite seconde longueur d'onde de marquage sur ladite deuxième desdites fibres optiques au niveau de la seconde extrémité (301) du câble optique, et
- recevoir une réflexion de ladite seconde impulsion de marquage optique au niveau de ladite seconde extrémité.

9. Procédé selon la revendication 8, dans lequel les fibres optiques candidates ne sont pas codées par couleur.

10. Procédé selon l'une quelconque des revendications 8 à 9, dans lequel lesdites fibres optiques candidates sont positionnées dans un câble optique sous-marin.
